# EUROPEAN PATENT APPLICATION

(11) **EP 3 222 849 A1**
(43) Date of publication of application: **27.09.2017**
(21) Application number: 16162137.0
(22) Date of filing: 24.03.2016
(51) Int. Cl.: F03D 80/55, F03D 80/40, F03D 80/60

(54) **COOLING, DE-ICING AND CLEANING METHOD FOR A WIND TURBINE**

(71) Applicant: Siemens Aktiengesellschaft, 80333 München (DE)
(72) Inventor: Nielsen, Morten Bay, 8000 Aarhus (DK); Soerensen, Carsten Moeller, 7260 Sdr. Omme (DK)

(57) **Abstract**

Method for cooling, de-icing and cleaning a wind turbine (10) comprising an inner volume (136) where a flow of air (40, 50) is circulated by means of at least one ventilator (22, 26), the flow of air (40, 50) entering or exiting the inner volume (136) through at least one air filter (27, 28), the method comprising the steps of:
- operating the ventilator (22, 26) according to a first sense of rotation for generating a flow of air (40) entering the inner volume (136) through the at least one air filter (27, 28),
- inverting the sense of rotation of the ventilator (22, 26) for generating a flow of air (50) exiting the inner volume (136) through the at least one air filter (27, 28),
- maintaining the inverted sense of rotation of the ventilator (22, 26) for an interval of time (t, t1).

## Description

### Field of invention

The present invention relates to a method for cooling, de-icing and cleaning a component or a portion of a wind turbine, in particular a portion including the inner space of a nacelle of a wind turbine.

### Art Background

A wind turbine cooler, for example for cooling the gearbox and/or the generator inside the nacelle of a wind turbine, during operation is exposed to different types of dirt, for example dust, bugs and parts from plants like cotton fibers. This dirt normally accumulates on the cooler surface and inside the cooling fins during time, and decreases the flow through the cooler and thereby the cooling capability. This can ultimately lead to a stop of the turbine due to over temperature.

To avoid this inconvenience, a specific design of the air inlet or an air inlet grill or an air inlet filter may be provided to trap the dirt or, more generally, to prevent the dirt from clogging the cooler. However, at sites with severe dirt levels, the air inlet, air inlet grill or air inlet filter, can be nevertheless clogged to an extent that decreases the cooling capacity and ultimately may lead to a stop of the turbine due to over temperature.

At low temperatures ice and snow can build up at air inlets, inlet filters and inlet grills, thus decreasing the cooling capacity. This also may ultimately lead to a stop of the turbine due to over temperature.

In addition, some components cannot function when the temperature is too low. Such components particularly include grease pumps, electrical cabinets, hydraulic systems and main bearings. Typically, in a wind turbine, a yaw gear is included between the tower and the nacelle for allowing the yaw rotation of the nacelle around a vertical axis. The grease pump, which is also normally also included for lubricating the yaw gear, can often not function when the air temperature around the pump and hoses is below 5°C. If such low temperatures are seen over longer periods of time, this can further cause critical components, like the yaw meshing, to fail.

To avoid the above inconveniences, coolers and/or air inlet, air inlet grill or air inlet filter are typically cleaned at regular turbine service intervals, for example once in a year. However, in areas with e.g. many bugs or heavy agricultural activity additional service intervals can be needed. Icing problems inconveniences have partly been solved by having open type inlet grills and mesh, which however tends to allow small birds, bugs and parts from plants, e.g. cotton into the cooler.

Icing can also be solved by means of electrical heating, i.e. a heater in near proximity of an inlet filter or inlet grill can be provided to transfer heat by means of convection or radiation, to the area affecting by ice/snow, and thereby melting the ice/snow, to regain the free air flow though the inlet filter, the inlet grill and the cooler.

Electrical heating is also used to keep components warm and making sure, that these components do function even in cold weather.

The above solutions to avoid the above described inconveniences are not yet to be considered optimal. There is still a need in the above described technical field to provide an improved cooling, de-icing and cleaning method, which may, in particular:
- limit the amount of service required for the cleaning;
- avoid the use of open type inlet grills and mesh,
- avoid the use of additional components, such as electrical heaters for de-icing operations.

### Summary of the Invention

This need may be met by the subject matter according to the independent claims. Advantageous embodiments of the present invention are described by the dependent claims.

According to an aspect of the invention, a method for cooling de-icing and cleaning a wind turbine is provided. The wind turbine comprises an inner volume where a flow of air is circulated by means of at least one ventilator, the flow of air entering or exiting the inner volume through at least one air filter. The method comprises the steps of:
- operating the at least one ventilator according to a first sense of rotation for generating a flow of air entering the inner volume through the at least one air filter,
- inverting the sense of rotation of the at least one ventilator for generating a flow of air exiting the inner volume through the at least one air filter,
- maintaining the inverted sense of rotation of the at least one ventilator for an interval of time.

By reversing the sense of rotation of the ventilator (s), air is taken from the outside of the inner volume, and is heated up before being blown through the air filter(s) and exiting the inner volume. This removes both dirt and ice from the air filter(s).

Advantageously, according to the present invention, the inversion of the sense of rotation of the ventilator(s) included in the inner volume of the wind turbine allows to:
- prolonging service intervals to clean filters,
- removing the risk of higher temperatures because of iced filter, inlet grills and mesh.
- removing the risk of higher temperatures because of dust, bugs and parts from plants in filter, inlet grills and mesh.
- prolonging the lifetime of components in the turbine by warming up such components when ambient temperatures are low.
- achieving less dirt accumulation.

According to a possible embodiment of the invention, the method comprises the steps of:
- operating the at least one ventilator according to the first sense of rotation, for a first interval of time,
- inverting the sense of rotation of the at least one ventilator,
- maintaining the at least one ventilator to the inverted sense of rotation, for a second interval of time,
- switching back the at least one ventilator to the first sense of rotation.

Particularly, the first interval of time may be comprised between 0,5 and 3 hours and the second interval of time may be comprised between 2 minutes and 15 minutes.

Advantageously, according to the above embodiment, the sense of rotation of the ventilator(s) can be inverted regularly, e.g. a few minutes every few hours, thus preventing clogging, in particular due to ice.

According to another specific embodiment of the present invention the first interval of time is comprised between 10 and 30 hours and the second interval of time is in the order of some seconds, for example 5 to 30 seconds. Advantageously, such embodiment can be useful for cleaning the air filters once or twice in a day.

According to another possible embodiment of the invention, the sense of rotation of the at least one ventilator is inverted when a temperature measured inside the inner volume becomes higher than a predefined threshold value and is maintained to the inverted sense of rotation, for a third interval of time.

Particularly, the third interval of time may be comprised between 2 minutes and 15 minutes.

Particularly, the temperature may be measured in a coolant of a heat exchanger or of a cooler of the wind turbine.

This is based on the assumption that, when a temperature inside the wind turbine, particular the temperature of a coolant, is going beyond a predefined threshold, this may be due to clogging in an air filter of the wind turbine. Advantageously, the inversion of the sense of rotation of the ventilator(s) for the third interval of time removes or reduces the clogging.

The embodiments of the method described above, i.e. the regularly inversion of the sense of rotation of the ventilator(s) and the one-time inversion when a temperature becomes higher than a predefined threshold value, may also be applied together.

According to possible embodiments of the invention, the inner volume is comprised in a nacelle of the wind turbine. Particularly, inside a nacelle one or more ventilators are provided for establishing a flow of air entering or exiting the inner volume of the nacelle. The air provides cooling for components of the winds turbine inside the nacelle, particularly a power generator and a gearbox. According to a possible embodiment of the invention, two ventilators are provided inside the nacelle. One ventilator is associated to a heat exchanger for cooling the power generator; another ventilator is associated to a cooler for cooling the gearbox.

According to a possible embodiment of the invention, the inner volume of the nacelle further comprises a pump for pumping grease in a yaw gear, which is provided between the nacelle and the tower for allowing the rotation of the nacelle with respect to the tower, around a vertical yaw axis. The yaw pump is warmed by the flow of air generated when the rotation of the at least one ventilator is inverted. Advantageously, the inversion of the sense of rotation of the ventilator(s) inside the nacelle, besides removing ice and snow from the air filter, prevents the yaw pump to reach too low temperatures.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic section view of an exemplary wind turbine, which is operated according to the method of the present invention,
Figure 2 shows the same section view of Figure 1, illustrating another phase of the method of the present invention.

### Detailed Description

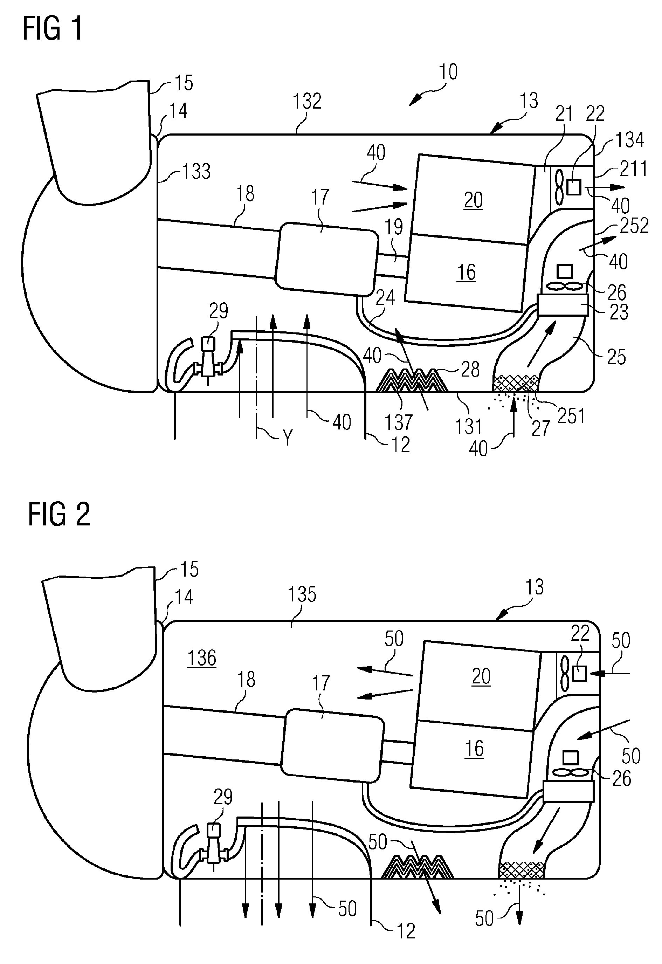

Figures 1 and 2 show a partial schematic section view of an exemplary wind turbine 10 (not shown as a whole).

The wind turbine 10 comprises a tower 12, a nacelle 13 and a rotor including a hub 14 with three pitch controlled rotor blades 15 (only one rotor blade 15 is partially show in the attached figures). The nacelle 13 is hollow and includes a lower side 131, at which the nacelle 13 is connected to the tower 12, and an opposite upper side 132. Between the nacelle 13 and the tower 12 a yaw gear (not represented) is provided for allowing the rotation of the nacelle 13 with respect to the tower 12, around a vertical yaw axis Y. At the top of the tower 12, a yaw pump 29 is provided for circulating lubricant grease in the yaw gear.

The nacelle 13 further includes a front side 133, at which the nacelle 13 is connected to the hub 14, and an opposite back side 134. The nacelle 13 also includes two lateral sides 135 (only one lateral side 135 is visible in the sectional views of the attached figures). The lower, upper, front, back and lateral sides 131, 132, 133, 134, 135 enclose an inner volume 136 of the nacelle 13.

Inside the inner volume 136, the wind turbine 10
includes a power generator 16, for converting a mechanical power of the hub 14 into electrical power, and a gear box 17 interposed between the power generator 16 and the hub 14. The gear box 17 is connected to the hub 14 through a primary shaft 18 and to the power generator 16 through a secondary shaft 19. The gear box 17 receives a mechanical input through

the primary shaft 18 and generates a mechanical output which is transferred to the power generator 16 through the secondary shaft 19.

Inside the inner volume 136, the wind turbine 10 further includes a heat exchanger 20, connected to the power generator 16, for cooling the power generator 16. In the heat exchanger 20, heat from the power generator 16 is transferred, through a coolant, to a mass of air, which is conveyed outside the nacelle 13, through a first air duct 21, which extends from the heat exchanger 20 to an opening 211, provided in the back side 134 of the nacelle 13. Inside the first air duct 21 a first axial ventilator 22 is provided for circulating air in the first air duct 21.

Inside the inner volume 136, the wind turbine 10 further includes a cooler 23, connected to the gear box 17, for cooling the gear box 17, by cooling the lubricant oil circulating in gear box 17. The cooler 23 is connected to the gear box 17 through an oil circuit 24. Hot lubricant oil from the gear box 17 is transferred through the oil circuit 24 to the cooler 23, where the lubricant oil is cooled by transferring heat to a mass of air, which is conveyed outside the nacelle 13, through a second air duct 25. The second air duct 25 extends between a first opening 251, provided in the lower side 131 of the nacelle 13 and a second opening 252, provided in the back side 134 of the nacelle 13. Inside the second air duct 25 a second axial ventilator 26 is provided between the cooler 23 and the second opening 252, for circulating air in the second air duct 25. At the first opening 251 of the second air duct 25, a first air inlet filter 27 is provided for preventing dirt, for example dust, bugs or others, to enter the second air duct 25.

At the lower side 131 of the nacelle 13 a further cooling opening 137 is provided for letting cooling air entering the inner volume 136. At the cooling opening 137 of the nacelle 13, a second air inlet filter 28 is provided for preventing dirt, for example dust, bugs or others, to enter the nacelle 13.

According to other possible embodiments, air inlet grills may be used instead of the air inlet filters 27, 28.

According to other possible embodiments, the nacelle 13 may include one or more further opening(s) on one (or more) of the lower, upper, front, back and lateral sides 131, 132, 133, 134, 135. Any of such openings may include a respective air inlet filter and/or an air inlet grill for preventing dirt, for example dust, bugs or others, to enter the nacelle 13. At low temperatures ice and snow can may build up at the inlet filters and inlet grills, thus decreasing the cooling capacity of the air entering through the respective opening.

For preventing or reducing the clogging of the air inlet filters (or grills) 27, 28 provoked by dirt or ice, the ventilators 22, 26 are operated, according to the present invention, as follows.

In a first operating mode (figure 1):
- the first ventilator 22 is operated to generate a flow of air in the first air duct 21, from the heat exchanger 20 to the opening 211, provided in the back side 134 of the nacelle 13;
- the second ventilator 25 is operated to generate a flow of air in the second air duct 25, from the first opening 251, where the air filter 27 is provided, to the second opening 252.

The flow of air generated by the rotation of the ventilators 22, 25 (and symbolized in figure 1 by arrows 40) makes air at a first temperature T1 enter the nacelle 13 through the top of the tower 12 and the openings 251 and 137, where the air filters 27, 28 are respectively provided. The first temperature T1 is the temperature of the environment around the nacelle 13. The air, after circulating in the inner volume 136 of the nacelle 13, exits through the opening 211 of the fist air duct 21 and through the second opening 252 of the second air duct 25, at a second temperature T2, higher than the first environment temperature T1.

During the first operating mode, dirt and eventually ice are subject to deposit or form at the air filters 27, 28.

In a second operating mode (figure 2), the sense of rotation of the ventilators 22 and 25 is inverted, i.e.:
- the first ventilator 22 is operated to generate a flow of air in the first air duct 21, from the opening 211, provided in the back side 134 of the nacelle 13 to the heat exchanger 20;
- the second ventilator 25 is operated to generate a flow of air in the second air duct 25, from the second opening 252 to the first opening 251, where the air filter 27 is provided.

The flow of air generated by the rotation of the ventilators 22, 25 (and symbolized in figure 2 by arrows 50) makes air at environment temperature T1 enter the nacelle 13 through the opening 211 of the fist air duct 21 and through the second opening 252 of the second air duct 25. The air, after circulating in the inner volume 136 of the nacelle 13, exits through the top of the tower 12 and the openings 251 and 137, at a third temperature T3, higher than the first temperature T1.

During the second operating mode, dirt and eventually ice deposited or formed at the air filters 27, 28, during the first operating mode, are subject to be removed. In addition, warmer air through the top of the tower 12 is also subject to raise the temperature of the yaw pump 29, improving the performances thereof at low temperature.

The switching from the first operating mode to the second operating mode is operated by the control system of the wind turbine 10, according to different strategies.

According to a first strategy, a method of cooling, de-icing and cleaning the nacelle 13 comprises:
- a first step of operating the first and the second ventilators 22, 26 according to the first operating mode during, for a first interval of time T,
- a second step of switching the first and the second ventilators 22, 26 to the second operating mode and maintaining them in such condition, for a second interval of time t,
- a third step of switching back the first and the second ventilators 22, 26 to the first operating mode.

According to possible embodiments of the present invention, the first interval of time T is longer than the second interval of time t.

According to a specific embodiment of the present invention the first interval of time T is comprised between 0,5 and 3 hours, for example one hour, and the second interval of time t is in the order of some minutes, for example 2 to 15 minutes. Such embodiment can be particularly useful for de-icing the air filters 27, 28.

According to another specific embodiment of the present invention the first interval of time T is comprised between 10 and 30 hours and the second interval of time t is in the order of some seconds, for example 5 to 30 seconds. Such embodiment can be particularly useful for cleaning the air filters 27, 28. This cleaning procedure is, for example, fixed at intervals of the first time interval T corresponding to once or twice per day. More particularly, the switching to the second operating mode is done, for example, before 11 AM to blow out the dirt before the ambient temperature gets too high. Another switching to the second operating mode is optionally done in the evening, as dew in the night can reach the filter and together with insects and plant parts form a sticky substance which is difficult to blow away from the air filter 27, 28. According to a second strategy, the method of cooling, de-icing and cleaning the nacelle 13 comprises the step of switching the first and the second ventilators 22, 26 to the second operating mode when a temperature measured inside the nacelle 13 becomes higher than a predefined threshold value T4. According to a second strategy, the method of cooling, de-icing and cleaning the nacelle 13 comprises the further step of maintaining the first and the second ventilators 22, 26 in the second operating mode for a third interval of time t1. This is based on the assumption that the temperature inside the nacelle 13 reaches higher values when the air filters 27, 28 are clogged.

According to a specific embodiment of the present invention the third interval of time t1 is in the order of some minutes, for example 2 to 15 minutes. The third interval of time t1 may be equal of different than the second interval of time t.

According to possible embodiments of the present invention, such measured temperature is the temperature of the coolant in the heat exchanger 20 or of the oil in the cooler 23. According to possible embodiments of the present invention, both the strategies above described are active at the same time.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method for cooling, de-icing and cleaning a wind turbine (10), the wind turbine (10) comprising an inner volume (136) where a flow of air (40, 50) is circulated by means of at least one ventilator (22, 26), the flow of air (40, 50) entering or exiting the inner volume (136) through at least one air filter (27, 28), the method comprising the steps of:
- operating the at least one ventilator (22, 26) according to a first sense of rotation for generating a flow of air (40) entering the inner volume (136) through the at least one air filter (27, 28),
- inverting the sense of rotation of the at least one ventilator (22, 26) for generating a flow of air (50) exiting the inner volume (136) through the at least one air filter (27, 28),
- maintaining the inverted sense of rotation of the at least one ventilator (22, 26) for an interval of time (t, t1).

2. Method as claimed in claim 1, comprising the steps of:
- operating the at least one ventilator (22, 26) according to the first sense of rotation, for a first interval of time (T),
- inverting the sense of rotation of the at least one ventilator (22, 26),
- maintaining the at least one ventilator (22, 26) to the inverted sense of rotation, for a second interval of time (t),
- switching back the at least one ventilator (22, 26) to the first sense of rotation.

3. Method as claimed in claim 2, wherein the first interval of time (T) is between 0,5 and 3 hours.

4. Method as claimed in claim 2, wherein the second interval of time (t) is comprised between 2 minutes and 15 minutes.

5. Method as claimed in claim 2, wherein the first interval of time (T) is between 15 and 30 hours.

6. Method as claimed in claim 2, wherein the second interval of time (t) is comprised between 5 seconds and 30 seconds.

7. Method as claimed in claim 1, wherein the sense of rotation of the at least one ventilator (22, 26) is inverted when a temperature measured inside the inner volume (136) becomes higher than a predefined threshold value (T4) and is maintained to the inverted sense of rotation, for a third interval of time (t1).

8. Method as claimed in claim 7, wherein the third interval of time (t1) is comprised between 2 minutes and 15 minutes.

9. Method as claimed in claim 7, wherein the temperature is measured in a coolant of a heat exchanger (20) or of a cooler (23) of the wind turbine (10).

10. Method as claimed in any of the previous claims, wherein the inner volume (136) is comprised in a nacelle (13) of the wind turbine (10).

11. Method as claimed in claim 10, wherein the flow of air (40, 50) entering or exiting the inner volume (136) of the nacelle (13) provides cooling for a power generator (16) and/or a gearbox (17) included in the inner volume (136).

12. Method as claimed in claim 10 or 11, wherein the inner volume (136) comprises a yaw pump (29) for circulating a lubricant in a yaw gear provided between the nacelle (13) and the tower (12) for allowing the rotation of the nacelle (13) with respect to the tower (12), around a vertical yaw axis (Y), the yaw pump (29) being warmed by the flow of air (50) generated when the rotation of the at least one ventilator (22, 26) is inverted.
